# EUROPEAN PATENT SPECIFICATION

(11) **EP 4 351 915 B1**
(45) Date of publication and mention of the grant of the patent: **03.06.2026**
(21) Application number: 22723520.7
(22) Date of filing: 25.04.2022
(51) Int. Cl.: B60L 53/30, B60L 53/31, G02B 5/23, G03B 11/04, G03B 29/00, G03B 30/00

(54) **KIOSK HAVING A CAMERA OCCLUDED BY A PHOTOCHROMIC COVER**
KIOSK MIT EINER VON EINER FOTOCHROMEN ABDECKUNG ABGEDECKTEN KAMERA
KIOSQUE COMPORTANT UNE CAMÉRA DISSIMULÉE PAR UN COUVERCLE PHOTOCHROMIQUE

(30) Priority: 09.06.2021 US 202163208626 P
(43) Date of publication of application: 17.04.2024
(73) Proprietor: Volta Charging, LLC, San Francisco, CA 94103 (US)
(72) Inventor: CARPENTER, Alexandra Prodaniuk, San Francisco, CA 94103 (US)
(74) Representative: Eisenführ Speiser
(86) International application number: PCT/US2022/026157
(87) International publication number: WO 2022/260770

(56) References cited:
- CN-A- 109 327 579
- CN-A- 109 819 212

## Description

### TECHNICAL FIELD

This application relates generally to electric vehicle charging stations and, more particularly, to occluding a camera from the view of passersby by using a photochromic cover over the camera.

### BACKGROUND

Electric vehicles are growing in popularity, largely due to their reduced environmental impact and lack of reliance on fossil fuels. These vehicles, however, typically need to be charged more frequently than a gas-powered vehicle would need to be refueled (e.g., every 100 miles as opposed to every 400 miles). As such, the availability of electric vehicle charging stations plays a significant role in users' decisions about where to travel.

Electric vehicle charging stations are often placed in areas with a high volume of foot-traffic. This makes the electric vehicle charging stations ideal for displaying advertisements for the public, as well as collecting information about passersby using cameras that are already installed in the electric vehicle charging stations.

CN 109819212 A relates to an assorted protection device for a new energy charging facility. The assorted protection device comprises a base, a cloud and a monitoring center. The new energy charging pileis arranged on the right side of the top end face of the base, and the top end face is fixedly connected with one flashing board through the supporting body A and the supporting body B correspondingly. The microprocessor is in data connection with the cloud network through the WIFI module, and the monitoring center is in network data connection with the WIFI module. T Data monitored and recorded by cameras vertically embedded in the centers of the inclined planes of the four chamfering structures are uploaded and stored in a cloud end in real time through a WIFI module. When an inspection maintainer finds that the new energy charging pile is maliciously damaged, the new energy charging pile is reported to a monitoring center, and the monitoring center calls data monitored and recorded by a camera installed on the current new energy charging pile in the cloud to determine the appearance of the damaged person and gives an alarm as evidence that the new energy charging pile maliciously damages the property.

CN 109327579 A relates to a camera cover plate, shell assembly of electronic equipment, and the electronic equipment. The camera cover plate comprises a cover plate body and a photochromic layer; the cover plate body is a transparent part, the cover plate body is provided with an outside surface and an inside surface opposite to each other, and the photochromic layer is arranged on the outside surface or the inside surface. According to the camera cover plate disclosed by the embodiment of the application, the photochromic layer is arranged on the transparent cover plate body, when the electronic equipment applying the camera cover plate performs the shooting, the photochromic layer can present a color when the external light intensity is excessive or the electronic equipment is in backlighting shooting, the color is gradually darkened along with the increasing of the light intensity, and the light transmittance of the photochromic layer is reduced, and the whole light transmittance rate the camera cover plate is reduced to play a filter effect on the external light intensity; the camera can acquire receiving light intensity more suitable for shooting, and acquire a better imaging effect.

### SUMMARY

The disclosed implementations include methods of occluding one or more cameras in a kiosk such that passersby do not see, or notice, the cameras, as well as kiosks having occluded cameras. For example, in some circumstances, advertisers that use kiosks to display content to passersby would like to collect data and other information about the individuals that walk by the kiosk to improve the content and receive feedback on how the current content is being viewed by the public. Unfortunately, when individuals notice cameras on the kiosks, they may alter their behavior, thus disrupting the impression made by the displayed content. This reduces the accuracy of impression counts and limits a content provider's ability to obtain the natural reactions of individuals passing by the kiosk once the individuals have become aware that they are on camera. On the other hand, conventional methods of occluding cameras, such as tinted domes used for security cameras, are ineffective in low-light conditions.

It is desirable, however, to continue to gather information and data using cameras on kiosks that are already placed in highly-trafficked areas, such as malls, parking, garages, and storefronts, without making individuals feel uncomfortable about being on camera. It is further desirable to be able to do so in both daylight and low-light conditions

To that end, in accordance with the claimed invention, a method is performed for occluding a camera integrated with a kiosk. The method includes placing a camera within a kiosk that includes a display and placing a photochromic cover overlapping the camera so as to hide the camera from view, wherein the photochromic cover at least partially surrounds the display. The photochromic cover becomes more or less tinted based on an amount of ambient light. The method further includes, detecting, using the camera viewed through the photochromic cover that changes its tint based on ambient light, an individual passing by the kiosk.

Some implementations of the present disclosure provide a kiosk that includes at least one display, a camera, and a photochromic cover overlapping the camera to hide the camera from view, and to perform any of the methods described herein.

### BRIEF DESCRIPTION OF THE DRAWINGS

For a better understanding of the various described implementations, reference should be made to the Detailed Description below, in conjunction with the following drawings in which like reference numerals refer to corresponding parts throughout the figures.
FIG. 1 illustrates a system for charging an electric vehicle in accordance with some, implementations.
FIGS. 2A-2F illustrate a charging station for an electric vehicle in accordance with some implementations.
FIG. 3 is a block diagram of a server system in accordance with some implementations.
FIG. 4 is a block diagram of a charging station for an electric vehicle in accordance with some implementations.
FIG. 5 is a block diagram of a user device in accordance with some implementations.
FIGS. 6A-6B illustrate a flowchart of a method of occluding a camera integrated with a kiosk, in accordance with some implementations.

### DETAILED DESCRIPTION

Reference will now be made in detail to implementations, examples of which are illustrated in the accompanying drawings. In the following detailed description, numerous specific details are set forth in order to provide a thorough understanding of the various described implementations. However, it will be apparent to one of ordinary skill in the art that the various described implementations may be practiced without these specific details within the scope of the claims. In other instances, well-known methods, procedures, components, circuits, and networks have not been described in detail so as not to unnecessarily obscure aspects of the implementations.

Many modifications and variations of this disclosure can be made without departing from the scope of the claims, as will be apparent to those skilled in the art. The specific implementations described herein are offered by way of example only, and the disclosure is to be limited only by the terms of the appended claims.

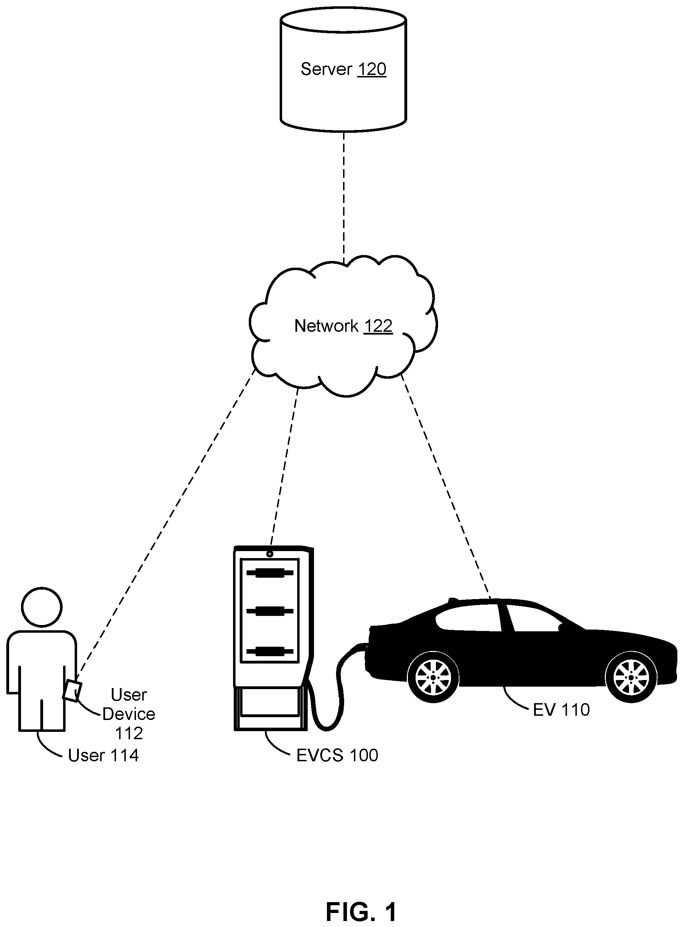

FIG. 1 illustrates an electric vehicle charging station (EVCS) 100 that is configured to provide an electric charge to an electric vehicle 110 via one or more electrical connections. In some implementations, the EVCS 100 provides an electric charge to electric vehicle 110 via a wired connection, such as a charging cable. Alternatively, the EVCS 100 may provide an electric charge to electric vehicle 110 via a wireless connection (e.g., wireless charging). In some implementations, the EVCS 100 may be in communication with the electric vehicle 110 or a user device 112 belonging to a user 114 (e.g., a driver, passenger, owner, renter, or other operator of the electric vehicle 110) that is associated with the electric vehicle 110. In some implementations, the EVCS 100 communicates with one or more devices or computer systems, such as user device 112 or server system 120, respectively, via a network 122.

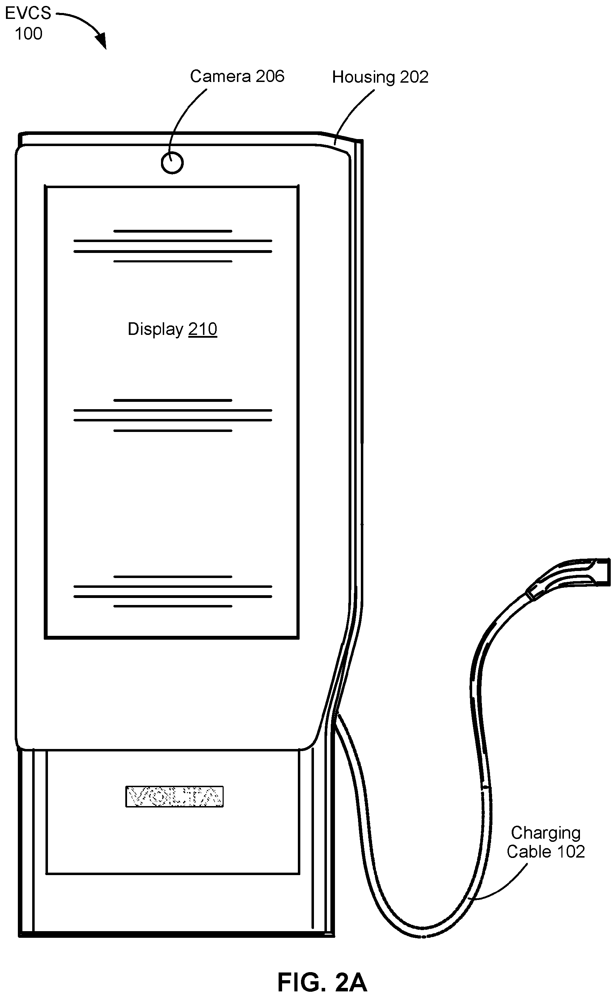

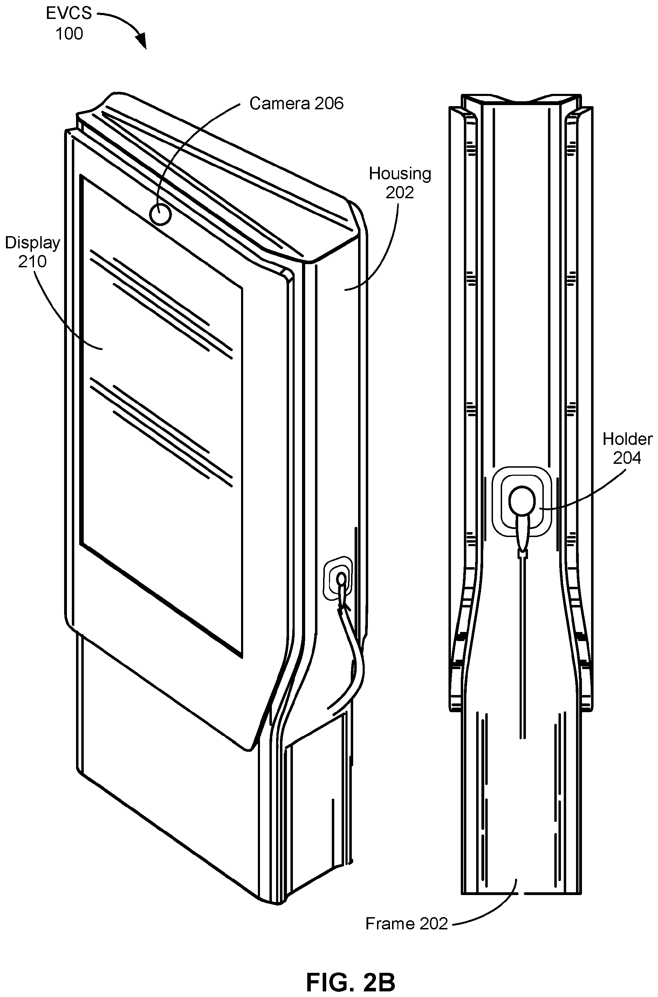

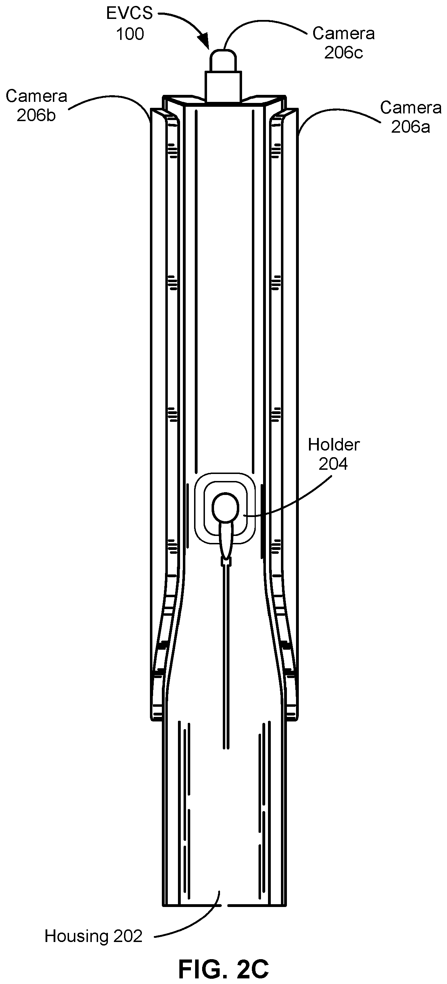

FIG. 2A is a mechanical drawing showing various views of an electric vehicle charging station (EVCS) 100, in accordance with some implementations. FIG. 2B is a mechanical drawing showing additional views of the EVCS 100 of FIG. 2A, in accordance with some implementations. FIG. 2C shows an alternative configuration of EVCS 100, in accordance with some implementations. FIGS. 2A - 2C are discussed together below.

EVCS 100 includes a housing 202 (e.g., a body or a chassis) including a charging cable 102 (e.g., connector) configured to connect and provide a charge to an electric vehicle 110 (FIG. 1). An example of a suitable connector is an IEC 62196 type-2 connector. In some implementations, the connector is a "gun-type" connector (e.g., a charge gun) that, when not in use, sits in a holder 204 (e.g., a holster). In some implementations, the housing 202 houses circuitry for charging an electric vehicle 110. For example, in some implementations, the housing 202 includes power supply circuitry as well as circuitry for determining a state of a vehicle being charged (e.g., whether the vehicle is connected via the connector, whether the vehicle is charging, whether the vehicle is done charging, etc.).

The EVCS 100 further includes one or more displays 210 facing outwardly from a surface of the EVCS 100. For example, the EVCS 100 may include two displays 210, one on each side of the EVCS 100, each display 210 facing outwardly from the EVCS 100. In some implementations, the one or more displays 210 display messages (e.g., media content) to users of the charging station (e.g., operators of the electric vehicle) and/or to passersby that are in proximity to the EVCS 100. In some implementations, each of the displays 210 are on a respective panel that has a height that is at least 60% of a height of the housing 202 and a width that is at least 90% of a width of the housing 202. In some implementations, the panel 102 has a height that is at least 3 feet and a width that is at least 2 feet.

In some implementations, the EVCS 100 includes one or more panels that hold a display 210. The displays are large compared to the housing 202 (e.g., 60% or more of the height of the frame and 80% or more of the width of the frame), allowing the displays 210 to function as billboards, capable of conveying information to passersby. In some implementations, the displays 210 are incorporated into articulating panels that articulate away from the housing 202 (e.g., a sub-frame). The articulating panels solve the technical problem of the need for maintenance of the displays 210 (as well as one or more computers that control content displayed on the display). To that end, the articulating panels provide easy access to the entire back of the displays 210. In addition, in some implementations, the remaining space between the articulating panels (e.g., within the housing 202) is hollow, allowing for ample airflow and cooling of the displays 210.

The EVCS 100 further includes a computer that includes one or more processors and memory. The memory stores instructions for displaying content on the display 210. In some implementations, the computer is disposed inside the housing 202. In some implementations, the computer is mounted on a panel that connects (e.g., mounts) a first display (e.g., a display 210) to the housing 202. In some implementations, the computer includes a near-field communication (NFC) system that is configured to interact with a user's device (e.g., user device 112 of a user 114 of the EVCS 100).

In some implementations, the EVCS 100 includes one or more sensors (not shown) for detecting whether external objects are within a predefined region (area) proximal to the housing. For example, the area proximal to the EVCS 100 includes one or more parking spaces, where an electric vehicle 110 parks in order to use the EVCS 100. In some implementations, the area proximal to the EVCS 100 includes walking paths (e.g., sidewalks) next to the EVES 100. In some implementations, the one or more sensors are configured to determine a state of the area proximal to the EVCS 100 (e.g., wherein determining the state includes detecting external objects). The external objects can be living or nonliving, such as people, kids, animals, vehicles, shopping carts, (kids) toys, etc. The one or more sensors can detect stationary or moving external objects. The one or more sensors of the EVCS 100 include one or more image (e.g., optical) sensors (e.g., one or more cameras 206), ultrasound sensors, depth sensors, IR/RGB cameras, PIR, heat IR, proximity sensors, radar, and/or tension sensors. The one or more sensors may be connected to the EVCS 100 or a computer system associated with the EVCS 100 via wired or wireless connections such as via a Wi-Fi connection or Bluetooth connection.

In some implementations, the housing 202 includes one or more lights configured to provide predetermined illumination patterns indicating a status of the EVCS 100. In some implementations, at least one of the one or more lights is configured to illuminate an area proximal to the EVCS 100 as a person approaches the area (e.g., a driver returning to a vehicle or a passenger exiting a vehicle that is parked in a parking spot associated with the EVCS 100).

In some implementations, the housing 202 includes one or more cameras 206 configured to capture one or more images of an area proximal to the EVCS 100. In some implementations, the one or more cameras 206 are configured to obtain video of an area proximal to the EVCS 100. For example, a camera may be configured to obtain a video or capture images of an area corresponding to a parking spot associated with the EVCS 100. In another example, another camera may be configured to obtain a video or capture images of an area corresponding to a parking spot next to the parking spot of the EVCS 100. In a third example, the camera 206 may be a wide angle camera or a 360° camera that is configured to obtain a video or capture images of a large area proximal to the EVCS 100, including a parking spot of the EVCS 100. As shown in FIG. 2B, the one or more cameras 206 may be mounted directly on a housing 202 of the EVCS 100 and may have a physical (e.g., electrical, wired) connection to the EVCS 100 or a computer system associated with the EVCS 100. In some embodiments, as shown in FIG. 2C, the one or more cameras 206 (or other sensors) may be positioned at different locations on the EVCS 100. For example, camera 206a is positioned on a first side of the EVCS 100, camera 206b is positioned on a second side, substantially opposite the first side, of the EVCS 100, and/or camera 206c is positioned on top of the EVCS (e.g., wherein camera 206c is a 360-degree camera). It will be understood that any combination of arrangements illustrated in FIG. 2C may be implemented (e.g., camera 206a and 206 only, or camera 206a and 206b only, etc.). In some embodiments, the one or more cameras 206 (or other sensors) may be positioned at different locations on the EVCS 100 than what is shown in the figures.

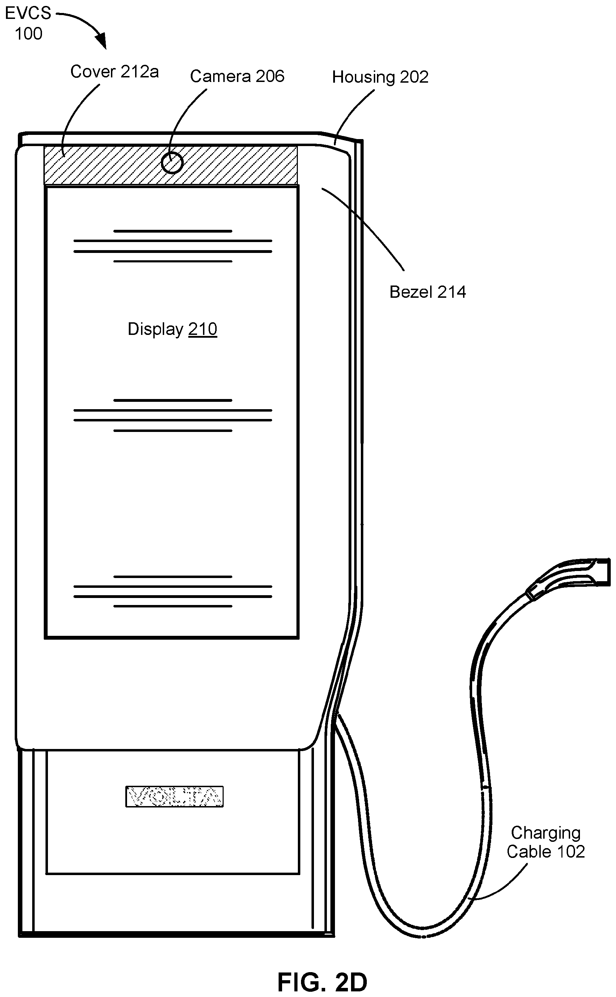

FIG. 2D is a mechanical drawing showing an electric vehicle charging station (EVCS) 100 with a cover 212a installed, in accordance with some implementations. In some embodiments, cover 212a is a photochromic cover, also referred to as a photochromatic cover, that has been designed with a base level tint, wherein the base level tint becomes lighter and/or darker in accordance with current ambient light conditions. For example, as ambient light conditions increase (e.g., more light hits the photochromic cover), the tint of the photochromic cover becomes darker. As ambient light conditions decrease (e.g., less light hits the photochromic cover), the tint of the photochromic cover becomes lighter. In some embodiments, the base level tint is determined (e.g., selected) according to a color of the kiosk such that, during typical lighting conditions, the base level tint substantially matches the color of the kiosk (e.g., the color of bezel 214 and/or the color of housing 202).

In some embodiments, because the tint of the photochromic cover changes based on the current ambient light conditions, the camera behind the photochromic cover is enabled to capture improved images through the photochromic cover, as compared to having a cover that does not change its tint. For example, under low-light conditions, it is beneficial for capturing images by the camera to have the cover be more translucent, and under bright-light conditions, it is beneficial to capture images using the camera when some of the bright light is filtered out using the tinted cover that is more opaque.

In some embodiments, cover 212a is placed on housing 202 such that it extends beyond camera 206. For example, cover 212a is larger than the camera and covers an area of the housing in addition to covering the camera. For example, cover 212a extends across a top portion of bezel 214 (e.g., which surrounds display 210). In some embodiments, in addition to covering camera 206, cover 212a also covers one or more sensors. For example, one or more sensors are placed near (e.g., next to) camera 206 on housing 202, and cover 212a. also hides the one or more sensors from view.

In some embodiments, the base level tint for cover 212a is selected based on a color (e.g., shade and/or material) of bezel 214. For example, the base level tint for cover 212a is selected to blend in with the color of bezel 214, such that an individual would not notice the camera and/or sensors behind the photochromic cover (e.g., because the photochromic cover appears as part of the bezel 214).

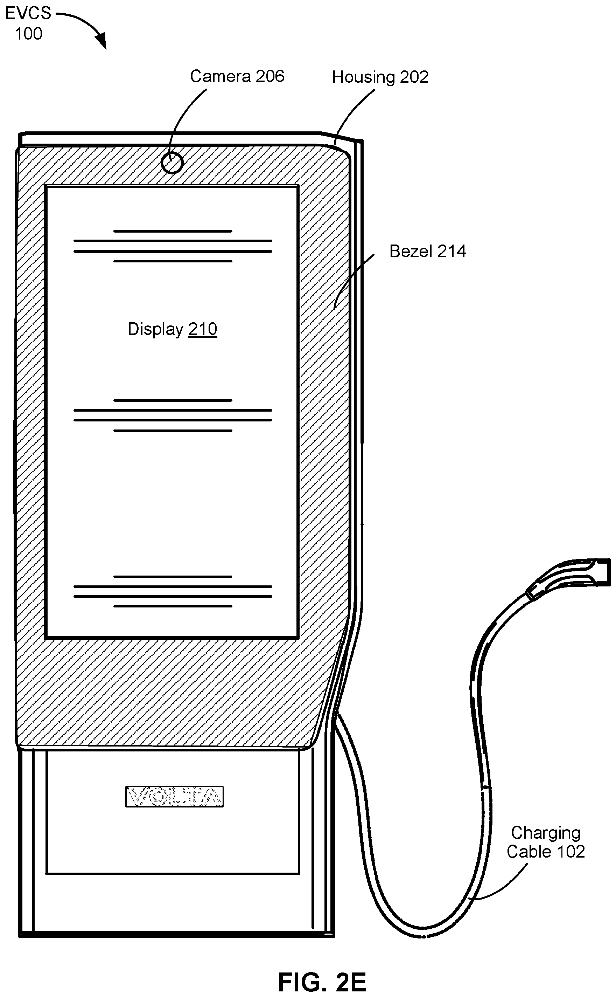

FIG. 2E is a mechanical drawing showing another implementation of using a photochromic material for the bezel 214 of EVCS 100. In FIG 2E, a photochromic bezel surrounds the display 210, in accordance with some implementations. For example, as explained above, bezel 214 surrounds the display 210 on all sides of the display. In some embodiments, the entirety of bezel 214 is made from the photochromic material (e.g., as illustrated in FIG. 2E) such that there is no difference between a bezel color or material and the photochromic cover.

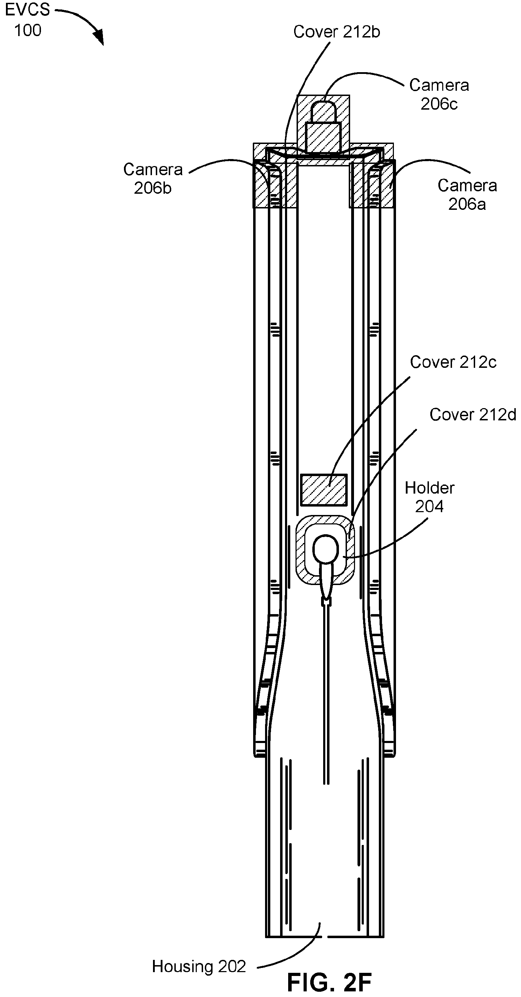

FIG. 2F shows another configuration of EVCS 100 with a plurality of cameras, similar to FIG. 2C, in accordance with some implementations. For example, FIG. 2F illustrates a cover 212b that covers (e.g., spans) a top portion of the EVCS 100. In some embodiments, EVCS 100 includes a camera positioned on top of the housing (e.g., camera 206c), and cover 212b is a photochromic cover that is placed over the plurality of cameras integrated in EVCS 100, including cameras installed on top and on the sides of the EVCS 100. For example, cover 212b spans the top portion of the EVCS 100 and extends at least partially down the sides of the EVCS 100 (e.g., to cover cameras 206a and 206b). In some embodiments, the photochromic cover is an enclosing cover (e.g., which encloses the top portion of the EVCS 100). For example, cover 212b is an enclosure that covers camera 206a, camera 206b, and camera 206c.

In some embodiments, two or more cameras that are integrated with EVCS 100 are placed in different areas of the housing 202 (e.g., on different sides of the housing 202). In some embodiments, at least one camera is positioned near (e.g., on top of) each display of the EVCS 100. For example, each display 210 of the EVCS 100 is associated with one or more cameras. Accordingly, for displays positioned on opposite sides of the housing 202, cameras are also positioned on opposite sides of the housing 202.

In some embodiments, cameras are integrated on an area of the housing 202 proximate to holder 204. For example, cover 212c is a photochromic cover over a camera that is integrated in housing 202 above the holder 204. In some embodiments, one or more cameras are integrated around the holder 204 (e.g., cover 212d surrounds the holder 204). It will be understood that any combination or subset of the covers 212 described with reference to Figures 2D-2F may be implemented on a same housing (e.g., the housing 202 includes cover 212b and cover 212c, but not cover 212d, etc.). Further, additional covers 212 (not shown) may be placed on housing 202 to cover cameras placed at different positions on housing 202. It will be understood that the tint (e.g., the base tint) and/or color of the covers 212 are varied based upon a color and/or material of the portion of the housing at which the respective cover is installed. For example, cover 212c is manufactured to have a base tint and/or color to match the panel of housing 202 that is above holder 204, and cover 212d is manufactured to have a base tint and/or color to match the material that surrounds holder 204. In some embodiments, the material that surrounds holder 204 comprises a display and/or LED lights.

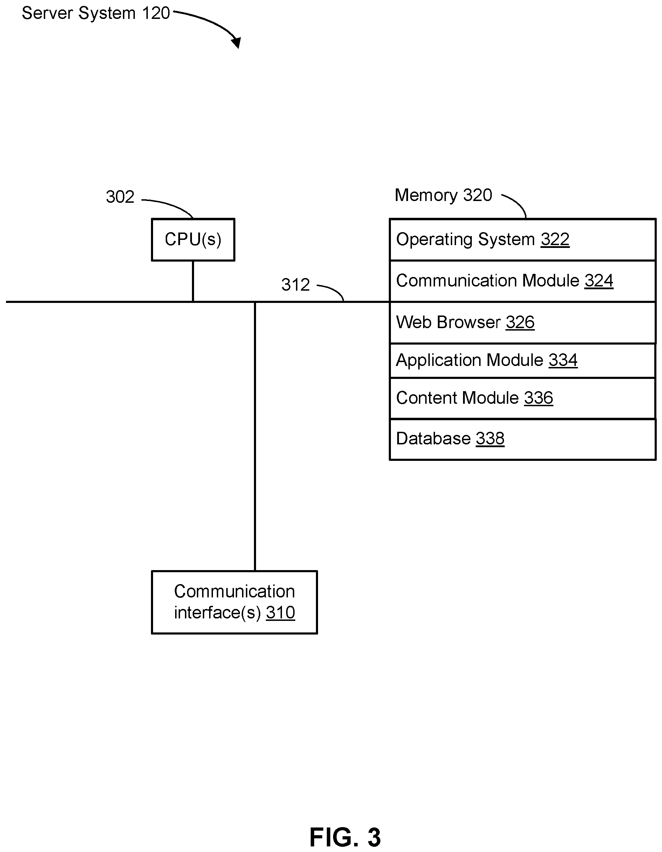

FIG. 3 is a block diagram of a server system 120, in accordance with some implementations. Server system 120 may include one or more computer systems (e.g., computing devices), such as a desktop computer, a laptop computer, and a tablet computer. In some implementations, the server system 120 is a data server that hosts one or more databases (e.g., databases of images or videos), models, or modules or may provide various executable applications or modules. The server system 120 includes one or more processing units (processors or cores, CPU(s)) 302, one or more network or other communications network interfaces 3 10, memory 320, and one or more communication buses 312 for interconnecting these components. The communication buses 3 12 optionally include circuitry (sometimes called a chipset) that interconnects and controls communications between system components.

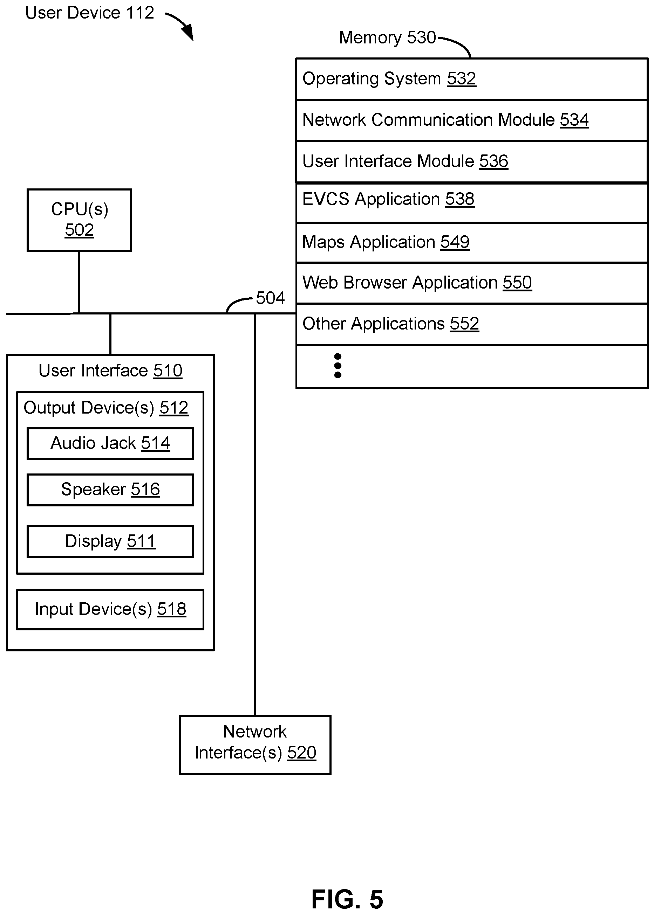

The memory 320 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. In some implementations, the memory 320 includes one or more storage devices remotely located from the one or more processing units 302. The memory 320, or alternatively the non-volatile memory devices within the memory 320, includes a non-transitory computer-readable storage medium. In some implementations, the memory 320 or the computer-readable storage medium of the memory 320 stores the following programs, modules, and data structures, or a subset or superset thereof:
- an operating system 322, which includes procedures for handling various basic system services and for performing hardware dependent tasks;
- a communications module 324, which is used for connecting the server system 120 to other computers and devices via the one or more communication network interfaces 310 (wired or wireless), such as the internet, other wide area networks, local area networks, metropolitan area networks, and so on;
- a web browser 326 (or other application capable of displaying web pages), which enables a user to communicate over a network with remote computers or devices;
- an application module 334 for providing services to EVCS mobile application 538 (FIG. 5), including responding to requests for available charging stations, identifying (e.g., in database 338) retail outlets that are co-located with electric vehicle charging stations, transmitting instructions to EVES mobile application 538 to display indications of available charging stations, together with representations of the co-located retail outlets, and so forth;
- a content module 336 for selecting and/or providing content to be displayed by one or more displays 210 of EVCS 100.
- database 338 for storing information on electric vehicle charging stations, their availability, retail outlets that are co-located with said electric vehicle charging stations, and so forth.

Each of the above identified executable modules, applications, or sets of procedures may be stored in one or more of the previously mentioned memory devices and corresponds to a set of instructions for performing a function described above. The above identified modules or programs (i.e., sets of instructions) need not be implemented as separate software programs, procedures, or modules, and thus various subsets of these modules may be combined or otherwise re-arranged in various implementations. In some implementations, the memory 320 stores a subset of the modules and data structures identified above. Furthermore, the memory 320 may store additional modules or data structures not described above.

Although FIG. 3 shows a server system 120, FIG. 3 is intended more as a functional description of the various features that may be present rather than as a structural schematic of the implementations described herein. In practice, and as recognized by those of ordinary skill in the art, items shown separately could be combined and some items could be separated.

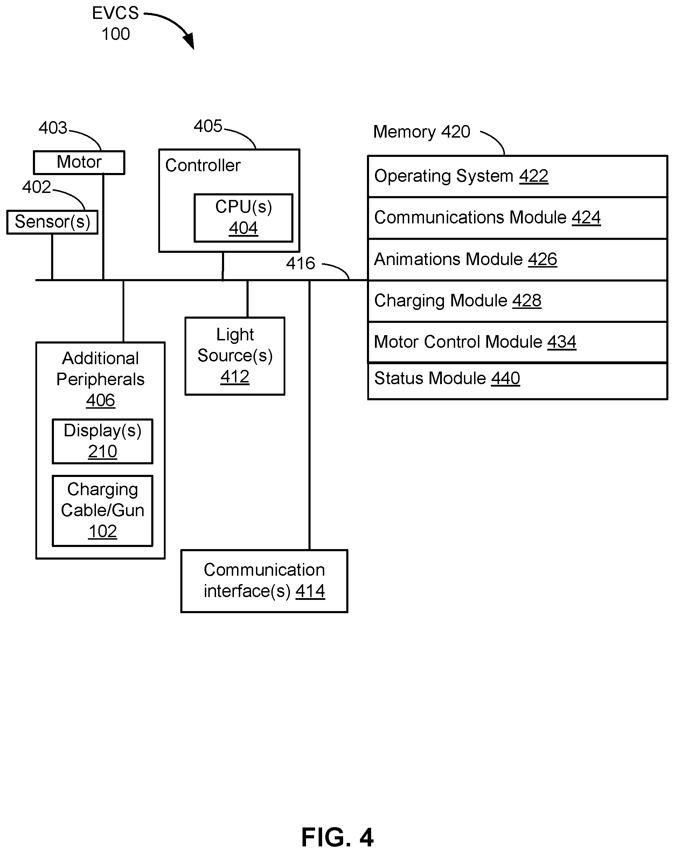

FIG. 4 is a block diagram of an EVCS 100 (FIGS. 1 and 2A-2F) for charging an electric vehicle, in accordance with some implementations. The EVCS 100 optionally includes a motor 403 (configured to retract a portion of a charging cable), a controller 405 that includes one or more processing units (processors or cores) 404, one or more network or other communications network interfaces 414, memory 420, one or more light sources 412, one or more sensors 402, additional peripherals 406, and one or more communication buses 416 for interconnecting these components. The communication buses 416 optionally include circuitry (sometimes called a chipset) that interconnects and controls communications between system components. In some implementations, the memory 420 stores instructions for performing (by the one or more processing units 404) a set of operations, including determining a status of the EVCS 100, wherein the status indicates a state of an electric vehicle 110 at the charging station.

EVCS 100 typically includes additional peripherals 406 such as displays 210 for displaying content, and charging cable 102. In some implementations, the displays 210 may be touch-sensitive displays that are configured to detect various swipe gestures (e.g., continuous gestures in vertical and/or horizontal directions) and/or other gestures (e.g., a single or double tap) or to detect user input via a soft keyboard that is displayed when keyboard entry is needed.

The user interface may also include one or more sensors 402 such as cameras (e.g., camera 206, described above with respect to FIGS. 2A-2B), ultrasound sensors, depth sensors, infrared cameras, visible (e.g., RGB or black and white) cameras, passive infrared sensors, heat detectors, infrared sensors, proximity sensors, or radar. In some implementations, the one or more sensors 402 are for detecting whether external objects are within a predefined region proximal to the housing, such as living and nonliving objects, and/or the status of the EVCS 100 (e.g., available, occupied, etc.) in order to perform an operation, such as retracting the charging cable safely and carefully.

The memory 420 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. In some implementations, the memory 420 includes one or more storage devices remotely located from the processing units 404, such as database 338 of server system 120 that is in communication with the EVCS 100. The memory 420, or alternatively the non-volatile memory devices within the memory 420, includes a non-transitory computer-readable storage medium. In some implementations, the memory 420 or the computer-readable storage medium of the memory 420 stores the following programs, modules, and data structures, or a subset or superset thereof:
- an operating system 422, which includes procedures for handling various basic system services and for performing hardware dependent tasks;
- a communications module 424, which is used for connecting the EVCS 100 to other computers and devices via the one or more communication network interfaces 414 (wired or wireless), such as the internet, other wide area networks, local area networks, metropolitan area networks, and so on;
- an animations module 426 for animating the one or more light sources 412 to provide predetermined illumination patterns or to provide illumination for passersby and users of the EVC S 100;
- a charging module 428 for charging an electric vehicle (e.g., measuring how much charge has been delivered to an electric vehicle, commencing charging, ceasing charging, etc.);
- motor control module 434 that includes one or more instructions for energizing or forgoing energizing the motor; and
- a status module 440 for monitoring a charging status of the EVCS 100 (e.g., a status of the EVCS 100 with respect to charging of an electric vehicle or its ability/inability to charge an electric vehicle).

In some implementations, the memory 420 stores metrics, thresholds, and other criteria, which are compared against the measurements captured by the one or more sensors 402. For example, data obtained from a PIR sensor of the one or more sensors 402 can be compared with baseline data to detect that an object is in proximity the EVCS 100.

Each of the above identified executable modules, applications, or sets of procedures may be stored in one or more of the previously mentioned memory devices and corresponds to a set of instructions for performing a function described above. The above identified modules or programs (i.e., sets of instructions) need not be implemented as separate software programs, procedures, or modules, and thus various subsets of these modules may be combined or otherwise re-arranged in various implementations. In some implementations, the memory 420 stores a subset of the modules and data structures identified above. Furthermore, the memory 420 may store additional modules or data structures not described above.

Although FIG. 4 shows an EVCS 100, FIG. 4 is intended more as a functional description of the various features that may be present rather than as a structural schematic of the implementations described herein. In practice, and as recognized by those of ordinary skill in the art, items shown separately could be combined and some items could be separated.

FIG. 5 is a block diagram of a user device 112 of a user 114 in accordance with some implementations. In some implementations, the user 114 is associated with (e.g., an operator of) an electric vehicle 110 at EVCS 100. Various examples of the user device 112 include a cellular-capable smart device such as a smartphone, a smart watch, a laptop computer, a tablet computer, and other computing devices that have a processor capable of connecting to the EVCS 100 via a communications network (e.g., network 122).

The user device 112 typically includes one or more processing units (processors or cores) 502, one or more network or other communications network interfaces 520, memory 530, and one or more communication buses 504 for interconnecting these components. The communication buses 504 optionally include circuitry (sometimes called a chipset) that interconnects and controls communications between system components. The user device 112 typically includes a user interface 510. The user interface 510 typically includes one or more output devices 512 such as an audio output device 514, such as speakers 516 or an audio output connection (e.g., audio jack) for connecting to speakers, earphones, or headphones. The user interface 510 also typically includes a display 511 (e.g., a screen or monitor). In some implementations, the user device 112 includes input devices 518 such as a keyboard, mouse, and/or other input buttons. Alternatively or in addition, in some implementations, the user device 112 includes a touch-sensitive surface. In some embodiments, the touch-sensitive surface is combined with the display 511, in which case the display 511 is a touch-sensitive display. In some implementations, the touch-sensitive surface is configured to detect various swipe gestures (e.g., continuous gestures in vertical and/or horizontal directions) and/or other gestures (e.g., single/double tap). In computing devices that have a touch-sensitive surface (e.g., a touch-sensitive display), a physical keyboard is optional (e.g., a soft keyboard may be displayed when keyboard entry is needed). Furthermore, user device 112 may also include a microphone and voice recognition software to supplement or replace the keyboard.

The memory 530 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. In some implementations, the memory 530 includes one or more storage devices remotely located from the processing units 502. The memory 530, or alternatively the non-volatile memory devices within the memory 530, includes a non-transitory computer-readable storage medium. In some implementations, the memory 530 or the computer-readable storage medium of the memory 530 stores the following programs, modules, and data structures, or a subset or superset thereof:
- an operating system 532, which includes procedures for handling various basic system services and for performing hardware dependent tasks;
- a network communication module 534, which is used for connecting the user device 112 to other computers and devices via the one or more communication network interfaces 520 (wired or wireless), such as the internet, other wide area networks, local area networks, metropolitan area networks, and so on;
- a user interface module 536 for providing user interfaces for the user to interact with the user device 112 via applications on the user device 112 and the operating system 532 of the user device 112;
- an EVCS mobile application 538 for communicating with an EVCS 100 or a server system that supports the EVCS 100. In some embodiments, EVCS mobile application 538 is capable of displaying a map of nearby electric vehicle charging stations (using a map module 540). As described below, in some embodiments, the map displays indications of nearby electric vehicle charging stations, in which the indications include representations of co-located retail outlets;
- a maps application 549 for providing turn-by-turn driving directions to a user;
- a web browser application 550 for accessing the internet and accessing websites on the internet, including providing functionalities on the EVCS mobile application 538 via a website accessed through web browser application 550; and
   to other applications 552 that the user 114 may have installed on the user device 112 or that may have been included as default applications on the user device 112.

Each of the above identified executable modules, applications, or sets of procedures may be stored in one or more of the previously mentioned memory devices and corresponds to a set of instructions for performing a function described above. The above identified modules or programs (i.e., sets of instructions) need not be implemented as separate software programs, procedures, or modules, and thus various subsets of these modules may be combined or otherwise re-arranged in various implementations. In some implementations, the memory 530 stores a subset of the modules and data structures identified above. Furthermore, the memory 530 may store additional modules or data structures not described above.

Although FIG. 5 shows a user device 112, FIG. 5 is intended more as a functional description of the various features that may be present rather than as a structural schematic of the implementations described herein. In practice, and as recognized by those of ordinary skill in the art, items shown separately could be combined and some items could be separated.

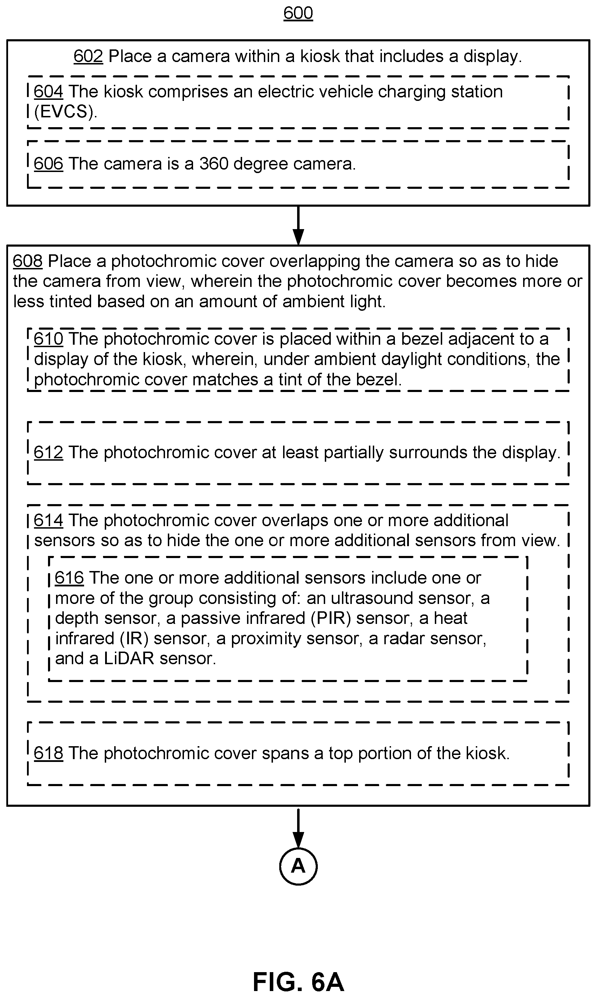

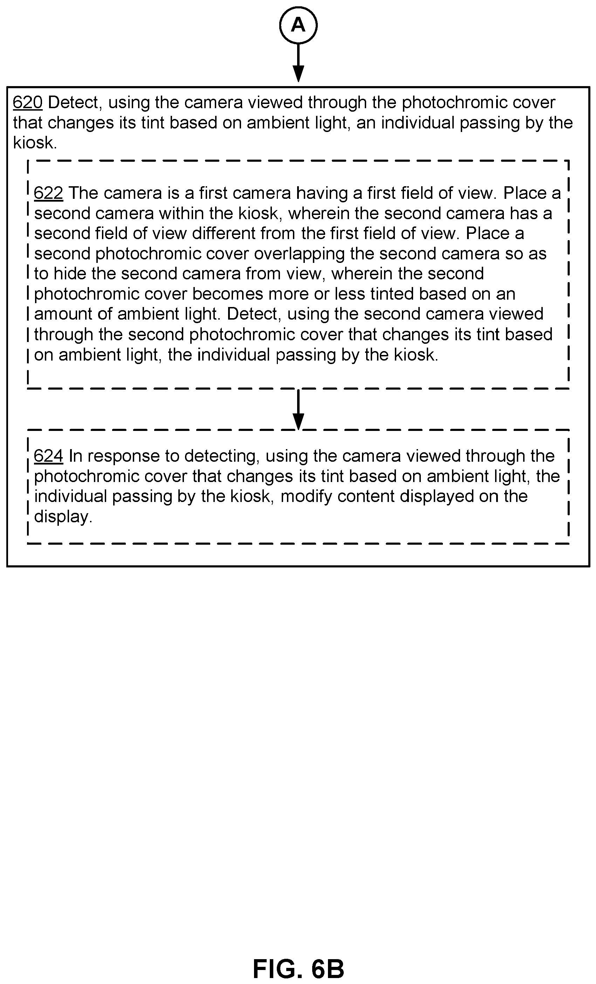

FIGS. 6A-6B illustrate a flowchart of a method 600 for occluding a camera integrated with a kiosk. In some embodiments, the method 1000 is performed at a kiosk (e.g., EVCS 100, FIG. 1),

The method 1000 comprises placing (602) a camera within a kiosk that includes a display. For example, housing 202 of EVCS 100 (e.g., a kiosk) includes a camera 206 and a display 210, as illustrated in FIG. 2A.

In some embodiments, the kiosk comprises (604) an electric vehicle charging station (EVCS). For example, as described with reference to FIGS. 2A-2F, the kiosk is EVCS 100. In some embodiments, the kiosk is not an EVCS. For example, the kiosk includes an electronic display 210 and a camera 206, but does not provide charge (e.g., using charging cable 102) for an electric vehicle.

In some embodiments, the camera is (606) a 360 degree camera. For example, as described with reference to FIG. 2F, camera 206c is a 360 degree camera placed on top of EVCS 100, such that camera 206c is enabled to capture the entire area surrounding (e.g., by 360 degrees) EVCS 100.

The method includes placing (608) a photochromic cover overlapping the camera so as to hide the camera from view, wherein the photochromic cover becomes more or less tinted based on an amount of ambient light. For example, cover 212a described with reference to FIG. 2D comprises a photochromic cover that overlaps camera 206.

In some embodiments, the photochromic cover is placed (610) within a bezel adjacent to a display of the kiosk, wherein, under ambient daylight conditions, the photochromic cover matches a tint of the bezel. For example, as described with reference to FIG. 2E, the photochromic cover overlaps the camera and extends over the entirety of bezel 214. In some embodiments, photochromic material is used to create (e.g., manufacture) bezel 214. In some embodiments, the photochromic material is only used for a top portion of the bezel 214 (e.g., cover 212a (FIG. 2D) overlaps camera 206 within the top portion of bezel 214, without overlapping the entirety of bezel 214 (e.g., which surrounds the display 210)). In some, embodiments, ambient daylight conditions are determined based on an average number of peak sun hours expected to be achieved for the kiosk based on a position (e.g., location) of the kiosk. In some embodiments, ambient daylight conditions are determined based on an amount of artificial lighting in proximity of the kiosk. It will be understood that selecting a tint for the photochromic cover is based on a variety of factors, but that the resulting cover is created so as to blend in with the bezel that surrounds the display of the kiosk.

In some embodiments, but in any case in the method according to claim 9, the photochromic cover at least partially surrounds (612) the display. For example, as illustrated in FIG. 2D, the photochromic cover is applied to the entirety of bezel 214, which surrounds display 210 on all sides.

In some embodiments, but in any case in the kiosk according to claim 1, the photochromic cover overlaps (614) one or more additional sensors so as to hide the one or more additional sensors from view. For example, as described with reference to FIG. 2A, in some embodiments, the kiosk (e.g., EVCS 100) includes one or more sensors. According to the claimed kiosk, the photochromic cover is placed over the one or more sensors (e.g., in addition to being placed over the camera). In some embodiments, a plurality of photochromic covers are used to cover the one or more sensors (e.g., the photochromic cover need not be a continuous cover that spans all of the sensors and the camera).

In some embodiments, the one or more additional sensors include (616) one or more of the group consisting of: an ultrasound sensor, a depth sensor, a passive infrared (PIR) sensor, a heat infrared (IR) sensor, a proximity sensor, a radar sensor, and a LiDAR sensor. In some embodiments, the one or more sensors are used to detect whether external objects (e.g., individuals) are within a predefined region (area) proximal to the kiosk.

In some embodiments, the photochromic cover spans (618) a top portion of the kiosk. For example, as described with reference to FIG. 2F, in some embodiments, the photochromic cover encloses the top portion of the kiosk (e.g., to cover camera 206c on top of the EVCS). In some embodiments, the photochromic cover is multi-faced. For example, the photochromic cover has at least two faces (e.g., sides covering camera 206a and camera 206b) and/or a top face (e.g., covering camera 206c).

The method includes detecting (620), using the camera viewed through the photochromic cover that changes its tint based on ambient light, an individual passing by the kiosk. In some embodiments, the camera is hidden from view from the perspective of the individual. For example, because the tint of the photochromic cover is changed based on the ambient light conditions, the photochromic cover makes it difficult for an individual to see the camera underneath the photochromic cover.

In some embodiments, the data recorded by the camera (e.g., including demographics and/or characteristics of the detected individual) is transmitted to a server system (e.g., server system 120, FIG. 3) (e.g., to be accessed by content providers (e.g., advertisers)). In some embodiments, the identity of the individual is not determined using the camera or images from the camera. For example, the individual that is detected by the camera (e.g., and any data collected from detecting the individual) is anonymized when sent to the server system. As such, the camera of the kiosk is not used to capture individualized data. In some embodiments, data collected from detecting the individual is aggregated with data collected from other individuals detected by the camera. In some embodiments, the individual passing by the kiosk is carrying a user device (e.g., user device 112, FIG. 5), and the kiosk is enabled to detect the user device (e.g., using one or more sensors of the kiosk). In some embodiments, the data recorded by the camera is aggregated (e.g., combined or compared) with information collected from detection of the user device.

In some embodiments, the camera is (622) a first camera having a first field of view. In some embodiments, the method further comprises placing a second camera within the kiosk. In some embodiments, the second camera has a second field of view different from the first field of view. In some embodiments, the method further comprises placing a second photochromic cover overlapping the second camera so as to hide the second camera from view. In some embodiments, the second photochromic cover becomes more or less tinted based on an amount of ambient light. In some embodiments, the method further comprises detecting, using the second camera viewed through the second photochromic cover that changes its tint based on ambient light, the individual passing by the kiosk. For example, the first and second camera both detect the individual passing by the kiosk. In some embodiments, only one of the first camera or the second camera detect the individual passing by the kiosk (e.g., as the first camera and the second camera have different fields of view).

In some embodiments, in response to detecting, using the camera viewed through the photochromic cover that changes its tint based on ambient light, the individual passing by the kiosk, the method includes modifying (624) content displayed on the display. In some embodiments, the kiosk selects (e.g., modifies) content displayed on the display that corresponds to the camera placed near the respective display. For example, the first camera is positioned above a first display of the kiosk and the second camera is positioned above a second display of the kiosk. In some embodiments, the individual is detected by the first camera as passing by the first display, and subsequently, the same individual is detected by the second camera as passing by the second display, such that the kiosk updates the second display to display content that is related to the content that was displayed on the first display at the time when the individual was detected by the first camera. For example, the content displayed on the first display is video content, and in response to detecting the individual by the second camera, the second display is updated to display the same video content (e.g., played back from a later position in the video content to appear as if the video is continuously playing for the individual).

It will be understood that, although the terms first, second, etc., are, in some instances, used herein to describe various elements, these elements should not be limited by these terms. These terms are only used to distinguish one element from another. For example, a first widget could be termed a second widget, and, similarly, a second widget could be termed a first widget, without departing from the scope of the various described implementations. The first widget and the second widget are both widgets, but they are not the same condition unless explicitly stated as such.

The terminology used in the description of the various described implementations herein is for the purpose of describing particular implementations only and is not intended to be limiting. As used in the description of the various described implementations and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The foregoing description, for purpose of explanation, has been described with reference to specific implementations. However, the illustrative discussions above are not intended to be exhaustive or to limit the scope of the claims to the precise forms disclosed. Many modifications and variations are possible in view of the above teachings. The implementations were chosen in order to best explain the principles underlying the claims and their practical applications, to thereby enable others skilled in the art to best use the implementations with various modifications as are suited to the particular uses contemplated.

## Claims

1. A kiosk, comprising:
at least one display (210);
a camera (206);
a photochromic cover (212a) overlapping the camera to hide the camera from view; and
one or more additional sensors, wherein the photochromic cover overlaps the one or more additional sensors so as to hide the one or more additional sensors from view.

2. The kiosk of claim 1, wherein the kiosk comprises an electric vehicle charging station (EVCS).

3. The kiosk of claim 1, wherein the photochromic cover is placed within a bezel adjacent to a display of the kiosk, wherein, under ambient daylight conditions, the photochromic cover matches a tint of the bezel.

4. The kiosk of claim 1, wherein the photochromic cover at least partially surrounds the display.

5. The kiosk of claim 1, wherein the one or more additional sensors include one or more of the group consisting of: an ultrasound sensor, a depth sensor, a passive infrared (PIR) sensor, a heat infrared (IR) sensor, a proximity sensor, a radar sensor, and a LiDAR sensor.

6. The kiosk of claim 1, wherein the photochromic cover spans a top portion of the kiosk.

7. The kiosk of claim 1, wherein the camera is a 360 degree camera.

8. The kiosk of claim 1, wherein:
the camera is a first camera having a first field of view; and
the kiosk comprises a second camera, wherein:
the second camera has a second field of view different from the first field of view,
a second photochromic cover overlaps the second camera so as to hide the second camera from view.

9. A method for occluding a camera integrated with a kiosk, comprising:
placing a camera (206) within a kiosk (100) that includes a display (210);
placing a photochromic cover (212a) overlapping the camera so as to hide the camera from view, wherein:
the photochromic cover becomes more or less tinted based on an amount of ambient light, and
the photochromic cover at least partially surrounds the display; and
detecting, using the camera viewed through the photochromic cover that changes its tint based on ambient light, an individual passing by the kiosk.

10. The method of claim 9, wherein the kiosk comprises an electric vehicle charging station (EVCS).

11. The method of claim 9, wherein the photochromic cover is placed within a bezel adjacent to a display of the kiosk, wherein, under ambient daylight conditions, the photochromic cover matches a tint of the bezel.

12. The method of claim 9, wherein the photochromic cover overlaps one or more additional sensors so as to hide the one or more additional sensors from view.

13. The method of claim 12, wherein the one or more additional sensors include one or more of the group consisting of: an ultrasound sensor, a depth sensor, a passive infrared (PIR) sensor, a heat infrared (IR) sensor, a proximity sensor, a radar sensor, and a LiDAR sensor.

14. The method of claim 9, wherein the photochromic cover spans a top portion of the kiosk.

15. The method of claim 9, wherein the camera is a 360 degree camera.

## Patentansprüche

1. Kiosk, umfassend:
mindestens ein Display (210);
eine Kamera (206);
eine photochrome Abdeckung (212a), die die Kamera überdeckt, um die Kamera optisch zu verbergen; und
einen oder mehrere zusätzliche Sensoren, wobei die photochrome Abdeckung den einen oder die mehreren zusätzlichen Sensoren überdeckt, um den einen oder die mehreren zusätzlichen Sensoren optisch zu verbergen.

2. Kiosk nach Anspruch 1, wobei der Kiosk eine Ladestation für Elektrofahrzeuge (EVCS) umfasst.

3. Kiosk nach Anspruch 1, wobei die photochrome Abdeckung innerhalb einer Blende angrenzend an ein Display des Kiosks angeordnet ist, wobei die photochrome Abdeckung unter Umgebungslichtbedingungen eine Tönung aufweist, die der Tönung der Blende entspricht.

4. Kiosk nach Anspruch 1, wobei die photochrome Abdeckung das Display zumindest teilweise umgibt.

5. Kiosk nach Anspruch 1, wobei der eine oder die mehreren zusätzlichen Sensoren einen oder mehrere aus der Gruppe bestehend aus einem Ultraschallsensor, einem Tiefensensor, einem passiven Infrarotsensor (PIR), einem Wärme-Infrarotsensor (IR), einem Näherungssensor, einem Radarsensor und einem LiDAR-Sensor umfassen.

6. Kiosk nach Anspruch 1, wobei sich die photochrome Abdeckung über einen oberen Abschnitt des Kiosks erstreckt.

7. Kiosk nach Anspruch 1, wobei die Kamera eine 360-Grad-Kamera ist.

8. Kiosk nach Anspruch 1, wobei:
die Kamera eine erste Kamera mit einem ersten Sichtfeld ist; und
der Kiosk eine zweite Kamera umfasst, wobei:
die zweite Kamera ein zweites Sichtfeld aufweist, das sich vom ersten Sichtfeld unterscheidet, und
eine zweite photochrome Abdeckung die zweite Kamera überdeckt, um die zweite Kamera optisch zu verbergen.

9. Verfahren zum Verbergen einer in einen Kiosk integrierten Kamera, umfassend:
Platzieren einer Kamera (206) innerhalb eines Kiosks (100), der ein Display (210) einschließt;
Platzieren einer photochromen Abdeckung (212a), die die Kamera überdeckt, um die Kamera optisch zu verbergen, wobei:
die photochrome Abdeckung basierend auf einer Menge an Umgebungslicht mehr oder weniger getönt wird, und
die photochrome Abdeckung das Display zumindest teilweise umgibt; und
Erfassen einer am Kiosk vorbeigehenden Person, mittels einer durch die photochrome Abdeckung erfassenden Kamera, wobei die Abdeckung ihre Tönung in Abhängigkeit von dem Umgebungslicht anpasst.

10. Verfahren nach Anspruch 9, wobei der Kiosk eine Ladestation für Elektrofahrzeuge (EVCS) umfasst.

11. Verfahren nach Anspruch 9, wobei die photochrome Abdeckung innerhalb einer Blende angrenzend an ein Display des Kiosks angeordnet ist, wobei die photochrome Abdeckung unter Umgebungslichtbedingungen eine Tönung aufweist, die der Tönung der Blende entspricht.

12. Verfahren nach Anspruch 9, wobei die photochrome Abdeckung einen oder mehrere zusätzliche Sensoren überdeckt, um den einen oder die mehreren zusätzlichen Sensoren optisch zu verbergen.

13. Verfahren nach Anspruch 12, wobei der eine oder die mehreren zusätzlichen Sensoren einen oder mehrere aus der Gruppe bestehend aus einem Ultraschallsensor, einem Tiefensensor, einem passiven Infrarotsensor (PIR), einem Wärme-Infrarotsensor (IR), einem Näherungssensor, einem Radarsensor und einem LiDAR-Sensor umfassen.

14. Verfahren nach Anspruch 9, wobei sich die photochrome Abdeckung über einen oberen Abschnitt des Kiosks erstreckt.

15. Verfahren nach Anspruch 9, wobei die Kamera eine 360-Grad-Kamera ist.

## Revendications

1. Kiosque, comprenant :
au moins un dispositif d'affichage (210) ;
une caméra (206) ;
un recouvrement photochromique (212a) chevauchant la caméra pour cacher la caméra de la vue ; et
un ou plusieurs capteurs supplémentaires, dans lequel le recouvrement photochromique chevauche les un ou plusieurs capteurs supplémentaires de façon à cacher les un ou plusieurs capteurs supplémentaires de la vue.

2. Kiosque selon la revendication 1, dans lequel le kiosque comprend une borne de recharge pour véhicule électrique (EVCS).

3. Kiosque selon la revendication 1, dans lequel le recouvrement photochromique est placé à l'intérieur d'une lunette adjacente à un dispositif d'affichage du kiosque, dans lequel, dans des conditions de lumière du jour ambiante, le recouvrement photochromique correspond à une teinte de la lunette.

4. Kiosque selon la revendication 1, dans lequel le recouvrement photochromique entoure au moins en partie le dispositif d'affichage.

5. Kiosque selon la revendication 1, dans lequel les un ou plusieurs capteurs supplémentaires comportent un ou plusieurs éléments du groupe constitué par : un capteur à ultrasons, un capteur de profondeur, un capteur infrarouge passif (PIR), un capteur infrarouge (IR) de chaleur, un capteur de proximité, un capteur radar et un capteur LiDAR.

6. Kiosque selon la revendication 1, dans lequel le recouvrement photochromique s'étend sur une partie supérieure du kiosque.

7. Kiosque selon la revendication 1, dans lequel la caméra est une caméra à 360 degrés.

8. Kiosque selon la revendication 1, dans lequel :
la caméra est une première caméra ayant un premier champ de vision ; et
le kiosque comprend une deuxième caméra, dans lequel :
la deuxième caméra a un deuxième champ de vision différent du premier champ de vision,
un deuxième recouvrement photochromique chevauche la deuxième caméra de façon à cacher la deuxième caméra de la vue.

9. Procédé de dissimulation d'une caméra intégrée à un kiosque, comprenant :
la mise en place d'une caméra (206) à l'intérieur d'un kiosque (100) qui comporte un dispositif d'affichage (210) ;
la mise en place d'un recouvrement photochromique (212a) chevauchant la caméra de façon à cacher la caméra de la vue, dans lequel :
le recouvrement photochromique devient plus ou moins teinté sur la base d'une quantité de lumière ambiante, et
le recouvrement photochromique entoure au moins en partie le dispositif d'affichage ; et
la détection, à l'aide de la caméra vue à travers le recouvrement photochromique qui change sa teinte sur la base de la lumière ambiante, d'un individu passant devant le kiosque.

10. Procédé selon la revendication 9, dans lequel le kiosque comprend une borne de recharge pour véhicule électrique (EVCS).

11. Procédé selon la revendication 9, dans lequel le recouvrement photochromique est placé à l'intérieur d'une lunette adjacente à un dispositif d'affichage du kiosque, dans lequel, dans des conditions de lumière du jour ambiante, le recouvrement photochromique correspond à une teinte de la lunette.

12. Procédé selon la revendication 9, dans lequel le recouvrement photochromique chevauche un ou plusieurs capteurs supplémentaires de façon à cacher les un ou plusieurs capteurs supplémentaires de la vue.

13. Procédé selon la revendication 12, dans lequel les un ou plusieurs capteurs supplémentaires comportent un ou plusieurs éléments du groupe constitué par : un capteur à ultrasons, un capteur de profondeur, un capteur infrarouge passif (PIR), un capteur infrarouge (IR) de chaleur, un capteur de proximité, un capteur radar et un capteur LiDAR.

14. Procédé selon la revendication 9, dans lequel le recouvrement photochromique s'étend sur une partie supérieure du kiosque.

15. Procédé selon la revendication 9, dans lequel la caméra est une caméra à 360 degrés.
